# EUROPÄISCHE PATENTSCHRIFT

(11) **EP 4 070 406 B1**
(45) Veröffentlichungstag und Bekanntmachung des Hinweises auf die Patenterteilung: **15.10.2025**
(21) Anmeldenummer: 20816427.7
(22) Anmeldetag: 26.11.2020
(51) Int. Cl.: H01M 50/502, H01M 50/507, H01M 50/512, H01M 50/516, H01M 50/522, H01M 50/526, H01R 31/02

(54) **SAMMELSCHIENE FÜR EINE BATTERIE**
BUSBAR FOR A BATTERY
BARRE OMNIBUS POUR UNE BATTERIE

(30) Priorität: 02.12.2019 DE 102019132709
(43) Veröffentlichungstag der Anmeldung: 12.10.2022
(73) Patentinhaber: Viessmann Holding International GmbH, 35108 Allendorf (Eder) (DE)
(72) Erfinder: KLEE, Hanspeter, 35083 Wetter (DE)
(74) Vertreter: MERH-IP Matias Erny Reichl Hoffmann Patentanwälte PartG mbB
(86) Internationale Anmeldenummer: PCT/EP2020/083472
(87) Internationale Veröffentlichungsnummer: WO 2021/110527

(56) Entgegenhaltungen:
- WO-A2-2013/131588
- US-A1- 2017 047 572
- US-A1- 2018 330 895

## Beschreibung

Die vorliegende Erfindung betrifft eine Sammelschiene für eine elektrische Batterie zum elektrischen Verbinden einer Vielzahl von Einzelzellen der Batterie sowie eine elektrische Batterie mit einer Vielzahl von Einzelzellen und einer Sammelschiene zum elektrischen Verbinden der Einzelzellen.

Eine gattungsgemäße Batterie dient insbesondere als Energiespeicher zum Stromversorgung eines Gebäudes. Eine solche Batterie umfasst eine Vielzahl von Einzelzellen, die vorzugsweise parallel und/oder seriell geschaltet sind. Um eine gleichmäßige Belastung (Beladung und Entladung) der Einzelzellen zu erreichen, ist es notwendig, eine symmetrische bzw. homogene Stromverteilung über die gesamte Batterie, also über alle Einzelzellen, zu gewährleisten. Ferner ist es wichtig, die Verlustleistung so gering wie möglich zu halten. Eine durch die Erfindung zu lösende Aufgabe besteht darin, eine möglichst homogene Stromverteilung auf die Einzelzellen der Batterie zu erreichen.

Ein Zellverbinder für eine Batterie, der mindestens zwei übereinandergestapelte elektrische leitende Folienschichten aufweist, wird beispielsweise in der deutschen Patentanmeldung DE 10 2013 213 540 A1 beschrieben. Der Zellverbinder weist eine Entlastungswelle auf, um mechanische Spannungen zwischen Einzelzellen der Batterie zu vermeiden.

Eine Sammelschiene aus mehreren Lagen Metallblech wird in der US-Patentanmeldung US 2019/304 621 A1 offenbart.

Die deutsche Patentanmeldung DE 10 2016 116 581 A1 offenbart eine Verbindungplatte zum Verbinden von Batteriezellen für eine Batterie. Die Verbindungplatte ist als eine Platine mit einem nicht leitfähigen Substrat ausgebildet, das mehrere Schichten aufweisen kann.

Internationale Patentanmeldung WO 2013/131 588 A2 lehrt ein Zellengehäuse, beispielsweise für einen Rucksack-Batteriesatz, das eine erste Wand, eine zweite Wand und eine dazwischenliegende Zellenhaltestruktur umfasst. Die Zellenhaltestruktur ist dazu ausgelegt, Batteriezellen festzuhalten, die in einer Matrix aus Reihen und Spalten angeordnet sind, sodass die Längsachse jeder Batteriezelle im Wesentlichen parallel zu den Längsachsen der anderen Batteriezellen verläuft. An der Außenseite des Zellgehäuses befinden sich mehrere Anschlüsse, die durch Öffnungen in der ersten und zweiten Wand des Zellgehäuses elektrisch mit den Batteriezellen verbunden sind. Die Verbinder verbinden die Zellen in jeder Reihe elektrisch parallel und die Zellen in jeder Spalte in Reihe. Die Verbinder können einheitliche Verbinder umfassen, die die positiven Anschlüsse von mindestens zwei Zellen einer Zellenreihe elektrisch miteinander und auch mit den negativen Anschlüssen von mindestens zwei Zellen einer anderen Zellenreihe verbinden. In den Verbindern kann mindestens eine Sicherung elektrisch zwischen mindestens einer Zelle und einer Vielzahl der anderen verbundenen Zellen angeordnet sein. Ein Relais kann in Reihe zwischen einer Leiterplatte und den Batteriezellen geschaltet werden, um die Zellen beim Auftreten eines vorbestimmten Ereignisses von der Last zu trennen.

Gemäß einem ersten Aspekt der Erfindung wird die Aufgabe durch eine Sammelschiene nach Anspruch 1 gelöst. Weitere Aspekte der Erfindung sind Gegenstand der Unteransprüche, der Zeichnungen und der folgenden Beschreibung von Ausführungsbeispielen.

Gemäß einem Aspekt der Erfindung umfasst eine Sammelschiene für eine elektrische Batterie zum elektrischen Verbinden einer Vielzahl von Einzelzellen der Batterie mindestens zwei übereinander gestapelte Leiterlagen. Durch das Stapeln von Leiterlagen kann eine mechanisch stabile Konstruktion erreicht werden, die einfach zu fertigen ist. Eine Leiterlage weist insbesondere einen rechteckigen Querschnitt auf und hat eine längliche Form. Das bedeutet insbesondere, dass die Länge einer Leiterlage um ein Vielfaches größer ist als die Breite der Leiterlage. Ferner ist die Breite der Leiterlage um ein Vielfaches größer als die Dicke der Leiterlage.

Die Leiterlagen können vorzugsweise durch dünne Metallbleche realisiert werden. Die Leiterlagen können beispielsweise eine Dicke von 1 bis 3 mm aufweisen.

Die Leiterlagen sind außer an vorgegebenen Kontaktstellen gegeneinander elektrisch isoliert. Die Isolierung kann beispielsweise durch einen Lack oder durch eine nichtleitende Schicht erreicht werden.

Eine unterste Leiterlage weist an einem ersten Ende einen Hauptanschluss zum Anschließen einer Stromversorgung auf. Der Hauptanschluss kann beispielsweise eine Anschlussklemme sein oder Bohrungen aufweisen, woran eine Stromleitung angeschlossen werden kann. Die unterste Leiterlage dient somit zum Anschließen einer Stromversorgung zum Laden der Einzelzellen beziehungsweise zum Abgeben eines Stroms von den Einzelzellen.

Eine oberste Leiterlage ist über mindestens eine erste Kontaktstelle und eine zweite Kontaktstelle mit der untersten Leiterlage elektrisch verbunden. Die oberste Leiterlage dient insbesondere auch zum Anschließen der Einzelzellen. Hierzu kann die oberste Leiterlage mit einer Vielzahl von Terminals beziehungsweise Zellverbindern verbunden werden.

Die erste Kontaktstelle ist in einem ersten Drittel in Längsrichtung der Sammelschiene angeordnet. Die zweite Kontaktstelle ist in einem dritten Drittel in Längsrichtung der Sammelschiene angeordnet. Die Anordnung der Kontaktstellen in Längsrichtung der Sammelschiene führt dazu, dass eine homogene Stromverteilung entlang der gesamten Länge der obersten Leiterlage erreicht werden kann.

Ein Strom vom Hauptanschluss zur ersten Kontaktstelle kann nur mit Richtungsumkehr in Längsrichtung fließen. Das heißt, dass der Strom ausgehend vom Hauptanschluss zunächst in positiver Richtung entlang der Längsachse der Sammelschiene fließt und in einem Bereich nahe der Mitte der untersten Leiterlage der Sammelschiene eine Richtungsumkehr erfährt, so dass der Strom in negativer Richtung entlang der Längsachse der Sammelschiene weiterfließt, bevor sich der Strompfad in der obersten Leiterlage verzweigt.

Ein Strom vom Hauptanschluss zur zweiten Kontaktstelle kann ohne Richtungsumkehr in Längsrichtung fließen. Der Strompfad verzweigt sich aber ebenfalls in der obersten Leiterlage. Die Längen der beiden beschriebenen Strompfade vom Hauptanschluss zur ersten Kontaktstelle beziehungsweise zur zweiten Kontaktstelle sind in etwa gleich groß.

Der elektrische Widerstand entlang einem ersten Strompfad zwischen Hauptanschluss und der ersten Kontaktstelle ist gleich dem elektrischen Widerstand entlang einem zweiten Strompfad zwischen dem Hauptanschluss und der zweiten Kontaktstelle. Dies hat zur Folge, dass auch ein Strom entlang dem ersten Strompfad gleich einem Strom entlang dem zweiten Strompfad ist, so dass eine homogene Stromverteilung in der obersten Leiterlage erreicht werden kann.

Erfindungsgemäß sind die mindestens zwei übereinander gestapelten Leiterlagen an den Kontaktstellen über jeweils mindestens einen Schweißpunkt elektrisch miteinander verbunden. Mittels Punktschweißen lässt sich der elektrische Kontakt zwischen der untersten Leiterlage und der obersten Leiterlage reproduzierbar und in einfacher Weise herstellen. Andere Verfahren zum elektrischen Kontaktieren können aber ebenfalls verwendet werden.

In einer bevorzugten Ausführung weist die Sammelschiene genau zwei Leiterlagen auf. Eine Sammelschiene mit nur zwei Leiterlagen hat den Vorteil, dass weniger Bauteile miteinander kontaktiert werden müssen. Außerdem können Material und Gewicht eingespart werden.

Der mindestens eine Schweißpunkt der ersten Kontaktstelle ist erfindungsgemäß auf einem halbinselförmigen Ausschnitt der untersten Leiterlage angeordnet. Der halbinselförmige Ausschnitt isoliert den Schweißpunkt beziehungsweise die erste Kontaktstelle von einer unmittelbaren Umgebung auf der untersten Leiterlage. Der halbinselförmige Ausschnitt sorgt somit dafür, dass der erste Strompfad vom Hauptanschluss zur ersten Kontaktstelle die gleiche Impedanz aufweist wie der zweite Strompfad vom Hauptanschluss zur zweiten Kontaktstelle.

Der halbinselförmige Ausschnitt ist vorzugsweise mit einem Bereich der untersten Leiterlage zwischen der ersten Kontaktstelle und der zweiten Kontaktstelle elektrisch verbunden, insbesondere mit einem Bereich in der Mitte zwischen der ersten Kontaktstelle und der zweiten Kontaktstelle. Ferner erstreckt sich der halbinselförmige Ausschnitt vorzugsweise in Längsrichtung der Sammelschiene. Diese Anordnung führt dazu, dass der Strom vom Hauptanschluss zur ersten Kontaktstelle eine Richtungsumkehr in Richtung der Längsachse vollziehen muss.

Die Sammelschiene weist an mindestens einem der Kontaktstellen eine seitliche Auskragung quer zur Längsrichtung auf, wodurch die Breite der Sammelschiene lokal vergrößert wird und zusätzlich als Arretierung genutzt werden kann.

Eine weitere bevorzugte Sammelschiene weist drei Leiterlagen auf. Bei einer Ausgestaltung mit drei Leiterlagen kann eine erste Y-förmige Stromverzweigung am Übergang zwischen der untersten Leiterlage und der mittleren Leiterlage bereitgestellt werden. Zwei weitere Y- förmige Stromverzweigungen können am Übergang zwischen der mittleren Leiterlage und der obersten Leiterlage bereitgestellt werden. Die Y-förmigen Stromverzweigungen werden jeweils an den Kontaktstellen erzeugt.

Die oberste Leiterlage ist durch Schweißpunkte an der ersten Kontaktstelle und der zweiten Kontaktstelle mit der mittleren Leiterlage elektrisch verbunden. Die elektrische Verbindung kann beispielsweise durch Verschweißen der Leiterlagen erfolgen. Die Lagen sind flächig sonst voneinander isoliert.

Die unterste Leiterlage ist durch Schweißpunkte an einer dritten Kontaktstelle mit der mittleren Leiterlage elektrisch verbunden. Die dritte Kontaktstelle ist mittig zwischen der ersten Kontaktstelle und der zweiten Kontaktstelle angeordnet.

Vorzugsweise ist die Sammelschiene einstückig aus einem Metallblech gefertigt und weist drei Leiterlagen auf. Bei einer einstückigen Ausgestaltung der Sammelschiene kann auf Scheißpunkte zwischen den Leiterlagen verzichtet werden. Somit kann die Sammelschiene besonders einfach und kostengünstig hergestellt werden.

Die drei Leiterlagen können durch Abkanten des Metallblechs an Verbindungsstücken übereinander gestapelt werden. Die Kontaktstellen sind als Verbindungsstücke an den Abkantungen vorgesehen.

Gemäß einem weiteren Aspekt der Erfindung umfasst eine elektrische Batterie mit einer Vielzahl von Einzelzellen mindestens eine Sammelschiene. Die oberste Leiterlage der Sammelschiene weist eine Vielzahl von Zellverbindern zum elektrischen Verbinden der Einzelzellen mit der Sammelschiene auf. Die Zellverbinder sind in gleichen Abständen entlang einer Längsrichtung der Sammelschiene angeordnet, so dass jede Einzelzelle mit demselben Strom versorgt werden kann, wenn eine Stromversorgung am Hauptanschluss der Sammelschiene angelegt wird.

### Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
- **Figur 1**: Fig. 1 zeigt ein erstes Ausführungsbeispiel einer erfindungsgemäßen Sammelschiene mit drei Leiterlagen (abgekantet oder geschweißt).
- **Figur 2**: Fig. 2 zeigt ein zweites Ausführungsbeispiel einer erfindungsgemäßen Sammelschiene mit zwei Leiterlagen.
- **Figur 3**: Fig. 3 zeigt ein drittes Ausführungsbeispiel einer erfindungsgemäßen Sammelschiene mit zwei Leiterlagen.
- **Figur 4**: Fig. 4 zeigt eine Schnittansicht einer beispielhaften erfindungsgemäßen elektrischen Batterie mit Sammelschienen.

### Ausführliche Beschreibung der Erfindung anhand von Ausführungsbeispielen

Bei der nachfolgenden Beschreibung einer bevorzugten Ausführungsform der vorliegenden Erfindung bezeichnen gleiche Bezugszeichen gleiche oder vergleichbare Komponenten.

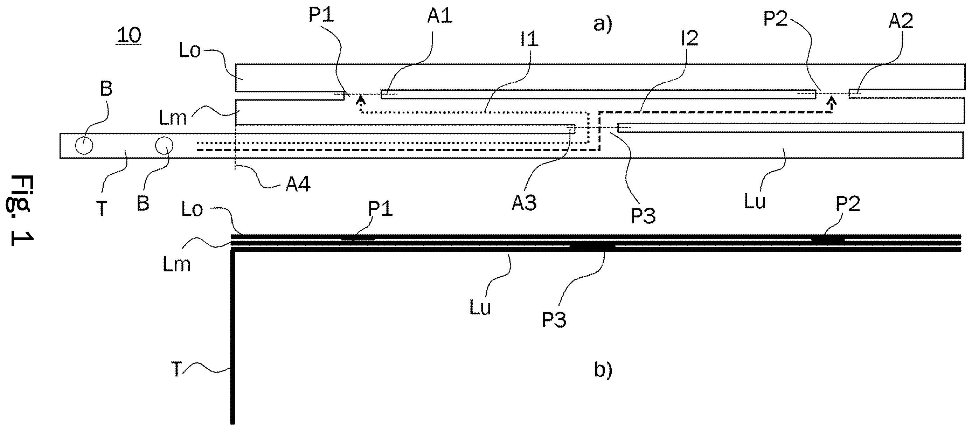

Fig. 1 zeigt ein erstes Ausführungsbeispiel einer Sammelschiene 10 für eine elektrische Batterie 20 zum elektrischen Verbinden einer Vielzahl von Einzelzellen 21 der Batterie 20. Die Sammelschiene 10 ist einstückig aus einem Metallblech gefertigt ist und weist drei Leiterlagen Lu, Lm, Lo auf: eine unterste Leiterlage Lu, eine mittlere Leiterlage Lm und eine oberste Leiterlage Lo.

Fig. 1a zeigt einen Zustand des Metallblechs nachdem die Form der Leiterlagen ausgeschnitten wurde und bevor die Sammelschiene 10 durch Abkanten des Metallblechs an den gestrichelt eingezeichneten Abkantungstellen A1, A2, A3 in ihre fertige Form gebracht wird. An einer weiteren Abkantungsstelle A4 der untersten Leiterlage Lu kann der Hauptanschluss T der Sammelschiene rechtwinklig zur Längsrichtung der Sammelschiene 10 angeordnet werden.

Die drei Leiterlagen Lu, Lm, Lo werden durch Abkanten des Metallblechs an den drei Abkantungstellen A1, A2, A3 übereinander gestapelt. Die Abkantungstellen A1, A2, A3 sind an Verbindungsstücken zwischen den einzelnen Leiterlagen Lu, Lm, Lo vorgesehen. Der fertige Zustand der Sammelschiene 10 ist in Fig. 1b als Seitenansicht dargestellt. Die Verbindungsstücke bilden die Kontaktstellen P1, P2, P3 zwischen den Leiterlagen Lu, Lm, Lo.

Der an einem ersten Ende der untersten Leiterlage Lu vorgesehene Hauptanschluss T weist zwei Bohrungen B zum Befestigen einer Leitung auf. Ein erster Strompfad I1 vom Hauptanschluss T zur ersten Kontaktstelle P1 ist in Fig. 1a als gepunkteter Pfeil eingezeichnet, Ein zweiter Strompfad I2 vom Hauptanschluss T zur zweiten Kontaktstelle P2 ist in Fig. 1n als gestrichelter Pfeil eingezeichnet. Die Länge der beiden Pfeile ist in etwa gleich groß. In anderen Worten, die beiden Strompfade sind gleich lang.

Wie man anhand der eingezeichneten Strompfade I1, I2 gut erkennen kann, fließt ein Strom I1 vom Hauptanschluss T zur ersten Kontaktstelle P1 mit einer Richtungsumkehr in Längsrichtung. Die Richtungsänderung findet an der dritten Kontaktstelle P3 statt. Ein Strom I2 vom Hauptanschluss T zur zweiten Kontaktstelle P2 kann ohne Richtungsumkehr in Längsrichtung fließen. Von den beiden Kontaktstellen P1, P2 in der obersten Leiterlage Lo kann sich der Strom entlang der Länge der obersten Leiterlage Lo ausbreiten. Durch die Anordnung der Kontaktstellen kann eine homogene Stromverteilung in der obersten Leiterlage Lo erreicht werden.

Wie Fig. 1 verdeutlicht ist die erste Kontaktstelle P1 in einem ersten Drittel in Längsrichtung der Sammelschiene 10 angeordnet. Die zweite Kontaktstelle P2 ist in einem dritten Drittel in Längsrichtung der Sammelschiene 10 angeordnet.

Die Länge der Sammelschiene 10 kann beispielsweise ca. 30 cm betragen. Die Breite der Sammelschiene 10 kann beispielsweise 10 bis 15 mm betrage. Die Dicke der Leiterlagen Lu, Lm, Lo beträgt beispielsweise ca. 1 bis 2 mm. Diese Werte sind nur beispielhafte Angaben und hängen von der Dimension und vom Aufbau der Batterie ab, für die die Sammelschiene 10 vorgesehen ist.

Die drei Leiterlagen Lu, Lm, Lo sind außer an den vorgegebenen Kontaktstellen P1. P2, P3 gegeneinander elektrisch isoliert, beispielsweise indem das Metallblech mit einem isolierenden Lack überzogen ist.

Die Sammelschiene 10 gemäß dem ersten Ausführungsbeispiel kann eine gleichmäßig Stromverteilung auf der obersten Leiterlage Lo erreichen und ist dabei besonders einfach und kostengünstig aus einem einstückigen Metallblech herzustellen, indem das Metallblech abgekantet wird. An der obersten Leiterlage Lo können zum Anschließen der Einzelzellen einer Batterie Zellverbinder kontaktiert werden, zum Beispiel durch Verschweißen der Zellverbinder mit der obersten Leiterlage Lo.

Die Sammelschiene 10 gemäß dem ersten Ausführungsbeispiel kann alternativ auch durch Punktschweißen hergestellt werden, so dass keine Abkantungen notwendig sind. Eine solche Sammelschiene 10 wird aus drei getrennten Leiterlagen hergestellt. Die oberste Leiterlage Lo wird durch Schweißpunkte an der ersten Kontaktstelle P1 und der zweiten Kontaktstelle P2 mit der mittleren Leiteralge Lm elektrisch und mechanisch verbunden. Die unterste Leiterlage Lu wird durch Schweißpunkte an einer dritten Kontaktstelle P3 mit der mittleren Leiteralge Lm elektrisch und mechanisch verbunden. Die dritte Kontaktstelle P3 ist hierbei mittig zwischen der ersten Kontaktstelle P1 und der zweiten Kontaktstelle P2 angeordnet, so dass zwei gleich lange Strompfade vom Hauptanschluss T zum ersten Kontaktstelle P1 bzw. zur zweiten Kontaktstelle P2 entstehen. Die fertige Sammelschiene 10 entspricht funktionell der Sammelschiene 10 des ersten Ausführungsbeispiels. Statt den Verbindungsstücken stellen die Schweißpunkte eine elektrische und mechanische Verbindung her.

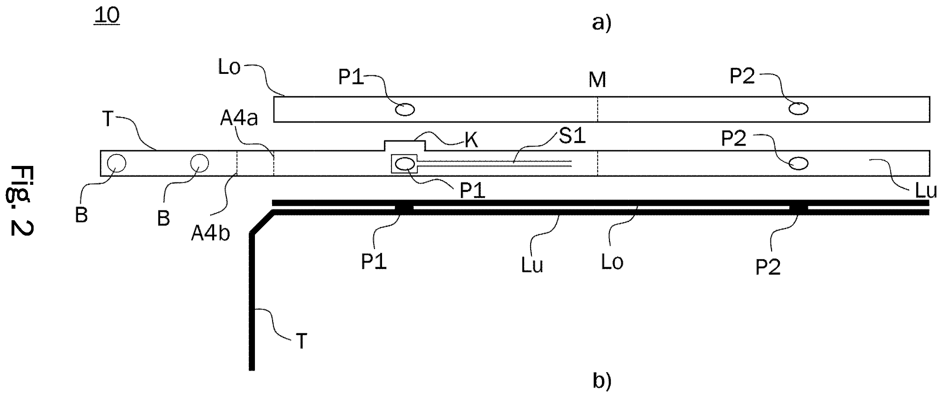

Fig. 2 zeigt ein zweites Beispiel einer erfindungsgemäßen Sammelschiene 10 mit zwei Leiterlagen Lo und Lu. Fig. 2a zeigt die beiden noch nicht verbundenen Leiterlagen Lo und Lu in einer Draufsicht. Fig. 2b zeigt eine Seitenansicht der fertigen Sammelschiene 10 mit den verschweißten Leiterlagen Lo und Lu.

Die oberste Leiterlage Lo ist über eine erste Kontaktstelle P1 und eine zweite Kontaktstelle P2 mit der untersten Leiterlage Lu mit jeweils einem Schweißpunkt elektrisch verbunden. Der Schweißpunkt der ersten Kontaktstelle P1 ist auf einem halbinselförmigen Ausschnitt S1 der untersten Leiterlage Lu angeordnet. Dieser Ausschnitt S1 kann beispielsweise durch Laserschneiden gefertigt werden. Durch das Ausschneiden ist der halbinselförmige Ausschnitt S1 von seiner direkten Umgebung in der untersten Leiterlage Lu elektrisch isoliert. Nahe der Mitte M ist der halbinselförmige Ausschnitt S1 mit dem mittigen Bereich der untersten Leiterlage Lu zwischen der ersten Kontaktstelle P1 und der zweiten Kontaktstelle P2 elektrisch verbunden. Wie in Fig. 2a dargestellt erstreckt sich der halbinselförmige Ausschnitt S1 in Längsrichtung der Sammelschiene 10.

Der halbinselförmige Ausschnitt S1 bewirkt wie auch beim ersten Ausführungsbeispiel, dass ein Strom vom Hauptanschluss T zur ersten Kontaktstelle P1 nur mit einer Richtungsumkehr in Richtung der Längsachse der Sammelschiene 10 fließen kann. Ein Strom vom Hauptanschluss T zur zweiten Kontaktstelle P2 kann dagegen ohne eine Richtungsumkehr in der Längsrichtung fließen. Somit wird wie auch bei der Sammelschiene 10 gemäß dem ersten Ausführungsbeispiel erreicht, dass der elektrische Widerstand entlang einem ersten Strompfad zwischen Hauptanschluss T und der ersten Kontaktstelle P1 gleich dem elektrischen Widerstand entlang einem zweiten Strompfad zwischen dem Hauptanschluss T und der zweiten Kontaktstelle P2 ist. Somit kann auf der obersten Leiterlage Lo der Sammelschiene 10 gemäß dem zweiten Ausführungsbeispiel eine homogene Stromverteilung bereitgestellt werden.

Die Sammelschiene 10 weist an der ersten Kontaktstelle P1 eine seitliche Auskragung K quer zur Längsrichtung auf Hierdurch wird die Breite der Sammelschiene 10 lokal vergrößert. Diese Auskragung K dient einerseits der mechanischen Stabilität und andererseits bietet sie eine Verankerung beim Befestigen der Sammelschiene 10 in einer elektrischen Batterie 20.

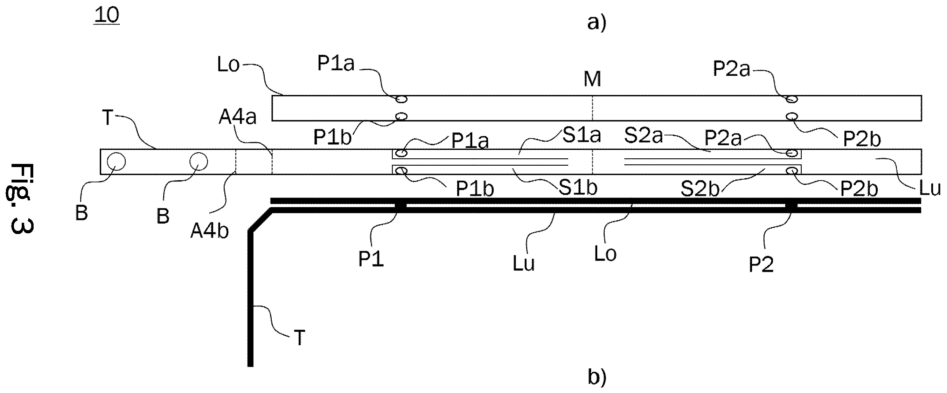

Ein weiteres Ausführungsbeispiel der Sammelschiene 10 ist in Fig. 3 dargestellt. Dieses Ausführungsbeispiel unterscheidet sich von dem in Fig. 2 gezeigten Ausführungsbeispiel darin, dass die oberste Leiterlage Lo der Sammelschiene 10 über vier Schweißpunkte P1a, P1b, P2a, P2b mit der untersten Leiterlage Lu der Sammelschiene 10 verbunden ist. Die Schweißpunkte sind jeweils paarweise mit gleichem Abstand zur eingezeichneten Mitte M angeordnet. Ferner ist jeder Schweißpunkt auf einem eigenen Ausschnitt S1a, S1b, S2a, S2b angeordnet. Die Ausschnitte S1a, S1b, S2a, S2b können beispielsweise durch Laserschneiden gefertigt werden. Durch die Ausschnitte sind die Schweißpunkte P1a, P1b, P2a, P2b jeweils von der Umgebung auf der Leiterlage Lu isoliert.

Funktionell erreicht das dritte Ausführungsbeispiel der Sammelschiene 10 denselben Effekt wie das erste und zweite Ausführungsbeispiel. Der Strompfad vom Hauptanschluss T zu den vier Kontaktstellen bzw. Schweißpunkten P1a, P1b, P2a, P2b ist jeweils gleich groß, so dass eine homogene Stromverteilung auf der obersten Leiterlage Lo erreicht werden kann.

Der schichtweise Aufbau der gezeigten Sammelschienen 10 gemäß den Ausführungsbeispielen mit der beschriebenen Kontaktierung bewirkt eine Verzweigung des Strompfades, und zwar an zwei Stellen. Eine erste Y-förmige Aufteilung des Stroms wird in beim zweiten und dritten Ausführungsbeispiel durch die Ausschnitte, insbesondere durch den ersten Ausschnitt S1, in der untersten Leiterlage Lu erreicht. Beim ersten Ausführungsbeispiel wird die Y-förmige Aufteilung des Stroms am Übergang von der untersten Leiterlage Lu zur mittleren Leiterlage erreicht.

Eine zweite Y-förmige Aufteilung des Stroms wird an den Kontaktstellen P1, P2 zur obersten Leiterlage bewirkt. Im ersten Ausführungsbeispiel wird die zweite Verzweigung der Strompfade an den beiden Übergängen von der mittleren Leiterlage Lm zur obersten Leiterlage Lo erzeugt. Im zweiten und dritten Ausführungsbeispiel bewirken die Schweißpunkte P1, P2 die zweite Y-förmige Aufteilung des Stroms. Allen Ausführungsbeispielen ist gemeinsam, dass durch die Position der Kontaktstellen P1, P2 in der obersten Leiterlage eine homogene Stromverteilung erreicht werden kann.

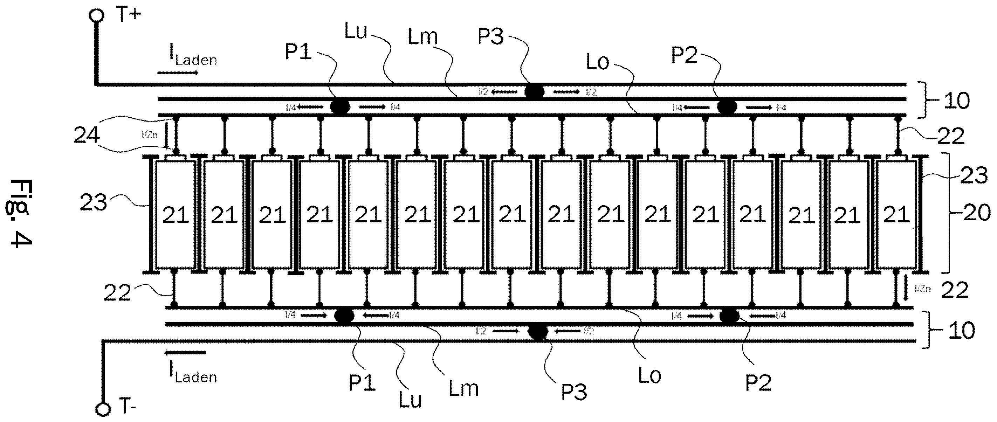

Fig. 4 zeigt eine schematische Schnittansicht einer beispielhaften erfindungsgemäßen elektrischen Batterie 20 mit einer Vielzahl von Einzelzellen 21. Die Schnittansicht von Fig. 4 zeigt eine Reihe mit sechzehn Einzelzellen 21. Die Einzelzellen 21 werden durch Zellenträger 23 gehalten. Der Übersicht halber sind in Fig. 4 nur jeweils die beiden äußeren Zellenträger 23 mit einem Bezugszeichen 23 versehen.

Jede Reihe der Batterie 20 weist zwei erfindungsgemäße Sammelschienen 10 zum elektrischen Verbinden der Einzelzellen 21 auf. Eine erste Sammelschiene 10 dient zum Verbinden der Pluspole der Einzelzellen 21 und eine zweite Sammelschiene 10 dient zum Verbinden der Minuspole der Einzelzellen 21. Die Sammelschiene 10 ist an einer Trägerstruktur der Batterie 20 befestigt. Diese Befestigung ist in Fig. 4 nicht explizit dargestellt. Die Hauptanschlüsse T+ und T- der beiden Sammelschienen 10 befindet sich auf der linken Bildseite. An den Hauptanschlüssen T+ und T- kann jeweils eine Stromleitung zum Laden oder Entladen der Einzelzellen 21 angeschlossen werden.

Die obersten Leiterlagen Lo der Sammelschienen 10 sind jeweils über eine Vielzahl von Zellverbindern 22 mit den Pluspolen bzw. Minuspolen der Einzelzellen 21 der Batterie 20 verbunden. Die Zellverbinder 22 können beispielsweise jeweils über Schweißpunkte 24 mit der obersten Leiterlage Lo elektrisch verbunden sein. Der Übersicht halber sind in Fig. 4 nur die beiden Schweißpunkte des Zellverbinders 22 oben links mit Bezugszeichen 24 versehen. Die Zellverbinder 22 sind in gleichen Abständen entlang einer Längsrichtung der Sammelschiene 10 angeordnet. Der Übersicht halber ist in Fig. 4 nur jeweils ein Zellverbinder 22 pro Sammelschiene 10 mit einem Bezugszeichen 22 versehen.

Die Sammelschienen 10 können jeweils über den Hauptanschluss T mit einer Stromzufuhr zum Laden bzw. Entladen der Einzelzellen 21 verbunden werden. Wie oben in den Ausführungsbeispielen der Sammelschiene 10 beschrieben wird auf der obersten Leiterlage Lo der Sammelschiene 10 eine homogene Stromverteilung bereitgestellt, so dass über jeden Zellverbinder 22 der gleiche Strom zur jeweiligen Einzelzelle 21 fließt.

Beim Laden der Batterie 20 fließt ein Strom I_{Laden} vom ersten Hauptanschluss T+ über die Einzelzellen 21 zum zweiten Hauptanschluss T-. Wie in Fig. 4 mittels Pfeilen angedeutet, teils sich der Strom I_{Laden} an den Kontaktstellen P1, P2, P3 auf. An der Kontaktstelle P3 zwischen der untersten Leiterlage Lu und der mittleren Leiterlage Lm verzweigt sich der Ladestrom I_{Laden}, so dass in der mittleren Leiterlage Lm jeweils ein halber Ladestrom I/2 zu den Kontaktstellen P1, P2 zwischen der mittleren Leiterlage Lm und der obersten Leiterlage Lo weiterfließt. An den Kontaktstellen P1, P2 zwischen der mittleren Leiterlage Lm und der obersten Leiterlage Lo verzweigt sich der Ladestrom I_{Laden} erneut, so dass jeweils ein Viertel des Ladestroms I/4 in der obersten Leiterlage Lo zu den Zellverbindern 22 weiterfließt. Über jeden Zellverbinder 22 fließt dann ein Ladestrom I/Zn (angedeutet durch einen Pfeil am ersten Zellverbinder 22), wobei Zn die Anzahl der Einzelzellen 21 pro Sammelschiene 10 ist. Im gezeigten Beispiel fließt also jeweils ein Strom I/16 zu jeder Einzelzelle 21.

Von den Minuspolen der Einzelzellen 21 fließt jeweils ein Strom I/Zn (angedeutet durch einen Pfeil am letzten Zellverbinder 22) in die oberste Leiterlage Lo der zweiten Sammelschiene 10. Die Ströme I/Zn fließen an den Kontaktstellen P1 und P2 zwischen der obersten Leiterlage Lo und der mittleren Leiterlage Lm zusammen, so dass in der mittleren Leiterlage Lm jeweils ein halber Ladestrom I/2 zur Kontaktstelle P3 zwischen der mittleren Leiterlage Lm und der untersten Leiterlage Lu fließt.

Die Darstellung des Stromflusses ist rein schematisch zu verstehen und dient lediglich dem Zweck der Illustration. Stromverluste durch den Ladevorgang bzw. durch den elektrischen Widerstand der Leiter und andere Verluste wurden hierbei nicht berücksichtigt.

## Patentansprüche

1. Sammelschiene (10) für eine elektrische Batterie (20) zum elektrischen Verbinden einer Vielzahl von Einzelzellen (21) der Batterie (20), wobei:
die Sammelschiene (10) mindestens zwei übereinander gestapelte Leiterlagen (Lu, Lo) aufweist;
die Leiterlagen (Lu, Lo) außer an vorgegebenen Kontaktstellen (P1. P2) gegeneinander elektrisch isoliert sind;
eine unterste Leiterlage (Lu) an einem ersten Ende einen Hauptanschluss (T) zum Anschließen einer Stromversorgung aufweist;
eine oberste Leiterlage (Lo) über mindestens eine erste Kontaktstelle (P1) und eine zweite Kontaktstelle (P2) mit der untersten Leiterlage (Lu) elektrisch verbunden ist; und
der elektrische Widerstand entlang einem ersten Strompfad zwischen Hauptanschluss (T) und der ersten Kontaktstelle (P1) gleich dem elektrischen Widerstand entlang einem zweiten Strompfad zwischen dem Hauptanschluss (T) und der zweiten Kontaktstelle (P2) ist, wobei:
die mindestens zwei übereinander gestapelten Leiterlagen (Lu, Lo) an den Kontaktstellen (P1, P2) über jeweils mindestens einen Schweißpunkt elektrisch verbunden sind, **dadurch gekennzeichnet, dass**
der mindestens eine Schweißpunkt der ersten Kontaktstelle (P1) auf einem halbinselförmigen Ausschnitt (S1) der untersten Leiterlage (Lu) angeordnet ist.

2. Sammelschiene (10) nach Anspruch 1, wobei:
die erste Kontaktstelle (P1) in einem ersten Drittel in Längsrichtung der Sammelschiene (10) angeordnet ist; und
die zweite Kontaktstelle (P2) in einem dritten Drittel in Längsrichtung der Sammelschiene (10) angeordnet ist.

3. Sammelschiene (10) nach Anspruch 1 oder 2, wobei
ein Strom vom Hauptanschluss (T) zur ersten Kontaktstelle (P1) nur mit Richtungsumkehr in Längsrichtung fließen kann; und
ein Strom vom Hauptanschluss (T) zur zweiten Kontaktstelle (P2) ohne Richtungsumkehr in Längsrichtung fließen kann.

4. Sammelschiene (10) nach mindestens einem der vorhergehenden Ansprüche, wobei die Sammelschiene (10) genau zwei Leiterlagen (Lu, Lo) aufweist.

5. Sammelschiene (10) nach Anspruch 1, wobei der halbinselförmige Ausschnitt (S1) mit einem Bereich der untersten Leiterlage (Lu) zwischen der ersten Kontaktstelle (P1) und der zweiten Kontaktstelle (P2) elektrisch verbunden ist.

6. Sammelschiene (10) nach Anspruch 1 oder 5, wobei sich der halbinselförmige Ausschnitt (S1) in Längsrichtung der Sammelschiene (10) erstreckt.

7. Sammelschiene (10) nach mindestens einem der vorhergehenden Ansprüche, wobei die Sammelschiene (10) an mindestens einem der Kontaktstellen (P1, P2) eine seitliche Auskragung (K) quer zur Längsrichtung aufweist, wodurch die Breite der Sammelschiene (10) lokal vergrößert wird.

8. Sammelschiene (10) nach mindestens einem der Ansprüche 1 bis 3, wobei:
die Sammelschiene (10) drei Leiterlagen (Lu, Lm, Lo) aufweist;
die oberste Leiterlage (Lo) durch Schweißpunkte an der ersten Kontaktstelle (P1) und der zweiten Kontaktstelle (P2) mit der mittleren Leiteralge (Lm) elektrisch verbunden ist;
die unterste Leiterlage (Lu) durch Schweißpunkte an einer dritten Kontaktstelle (P3) mit der mittleren Leiteralge (Lm) elektrisch verbunden ist; und
die dritte Kontaktstelle (P3) mittig zwischen der ersten Kontaktstelle (P1) und der zweiten Kontaktstelle (P2) angeordnet ist.

9. Elektrische Batterie (20) mit einer Vielzahl von Einzelzellen (21), wobei:
die Batterie (20) mindestens eine Sammelschiene (10) nach mindestens einem der Ansprüche 1 bis 8 aufweist;
die oberste Leiterlage (Lo) der Sammelschiene (10) eine Vielzahl von Zellverbindern (22) zum elektrischen Verbinden der Einzelzellen (21) mit der Sammelschiene (10) aufweist; und
die Zellverbinder (22) in gleichen Abständen entlang einer Längsrichtung der Sammelschiene (10) angeordnet sind.

## Claims

1. A busbar (10) for an electric battery (20) for electrically connecting a plurality of individual cells (21) of the battery (20), wherein:
the busbar (10) comprises at least two conductor layers (Lu, Lo) stacked one on top of the other;
the conductor layers (Lu, Lo) are electrically insulated from each other except at specific contact points (P1, P2);
a bottom conductor layer (Lu) comprises, at a first end, a main terminal (T) for connecting a power supply;
a top conductor layer (Lo) is electrically connected to the bottom conductor layer (Lu) via at least a first contact point (P1) and a second contact point (P2); and
the electrical resistance along a first current path between the main terminal (T) and the first contact point (P1) is equal to the electrical resistance along a second current path between the main terminal (T) and the second contact point (P2), wherein:
the at least two conductor layers (Lu, Lo) stacked one on top of the other are electrically connected at the contact points (P1, P2) through at least one welding spot, respectively, **characterized in that**
the at least one welding spot of the first contact point (P1) is arranged on a peninsular cutout (S1) of the bottom conductor layer (Lu).

2. The busbar (10) according to claim 1, wherein:
the first contact point (P1) is arranged in a first third in the longitudinal direction of the busbar (10); and
the second contact point (P2) is arranged in a third third in the longitudinal direction of the busbar (10).

3. The busbar (10) according to claim 1 or 2, wherein
a current from the main terminal (T) to the first contact point (P1) may flow in the longitudinal direction only with a reversal of direction; and
a current from the main terminal (T) to the second contact point (P2) may flow in the longitudinal direction without a reversal of direction.

4. The busbar (10) according to at least one of the preceding claims, wherein the busbar (10) comprises exactly two conductor layers (Lu, Lo).

5. The busbar (10) according to claim 1, wherein the peninsular cutout (S1) is electrically connected to an area of the bottom conductor layer (Lu) between the first contact point (P1) and the second contact point (P2).

6. The busbar (10) according to claim 1 or 5, wherein the peninsular cutout (S1) extends in the longitudinal direction of the busbar (10).

7. The busbar (10) according to at least one of the preceding claims, wherein the busbar (10) comprises, on at least one of the contact points (P1, P2), a lateral cantilever (K) across the longitudinal direction, thereby locally enlarging the width of the busbar (10).

8. The busbar (10) according to at least one of claims 1 to 3, wherein:
the busbar (10) comprises three conductor layers (Lu, Lm, Lo);
the top conductor layer (Lo) is electrically connected to the middle conductor layer (Lm) by welding spots at the first contact point (P1) and the second contact point (P2);
the bottom conductor layer (Lu) is electrically connected to the middle conductor layer (Lm) by welding spots at a third contact point (P3); and
the third contact point (P3) is arranged centered between the first contact point (P1) and the second contact point (P2).

9. An electric battery (20) with a plurality of individual cells (21), wherein:
the battery (20) comprises at least one busbar (10) according to at least one of claims 1 to 8;
the top conductor layer (Lo) of the busbar (10) comprises a plurality of cell connectors (22) for electrically connecting the individual cells (21) to the busbar (10); and
the cell connectors (22) are arranged at equal intervals along a longitudinal direction of the busbar (10).

## Revendications

1. Barre omnibus (10) pour une batterie électrique (20) pour connecter électriquement une pluralité de cellules individuelles (21) de la batterie (20), dans laquelle:
la barre omnibus (10) comprend au moins deux couches conductrices (Lu, Lo) empilées l'une sur l'autre;
les couches conductrices (Lu, Lo), sauf au niveau de points de contact prédéterminés (P1 ; P2) sont isolées électriquement l'une de l'autre;
une couche conductrice la plus basse (Lu) comprend, au niveau d'une première extrémité, une borne principale (T) pour connecter une alimentation électrique;
une couche conductrice la plus haute (Lo) est connectée électriquement à la couche conductrice la plus basse (Lu) via au moins un premier point de contact (P1) et un deuxième point de contact (P2) ; et
la résistance électrique le long d'un premier trajet de courant entre la borne principale (T) et le premier point de contact (P1) est égale à la résistance électrique le long d'un deuxième trajet de courant entre la borne principale (T) et le deuxième point de contact (P2), dans laquelle:
les au moins deux couches conductrices (Lu, Lo) empilées l'une sur l'autre sont connectées électriquement au niveau des points de contact (P1, P2) via respectivement au moins un point de soudure, **caractérisée en ce que**
l'au moins un point de soudure du premier point de contact (P1) est disposé sur une découpe en forme de péninsule (S1) de la couche conductrice la plus basse (Lu).

2. Barre omnibus (10) selon la revendication 1, dans laquelle:
le premier point de contact (P1) est disposé dans un premier tiers dans la direction longitudinale de la barre omnibus (10); et
le deuxième point de contact (P2) est disposé dans un troisième tiers dans la direction longitudinale de la barre omnibus (10).

3. Barre omnibus (10) selon la revendication 1 ou 2, dans laquelle:
un courant peut circuler de la borne principale (T) au premier point de contact (P1) uniquement avec une inversion de direction dans la direction longitudinale ; et
un courant peut circuler de la borne principale (T) au deuxième point de contact (P2) sans inversion de direction dans la direction longitudinale.

4. Barre omnibus (10) selon au moins l'une des revendications précédentes, dans laquelle la barre omnibus (10) comprend exactement deux couches conductrices (Lu, Lo).

5. Barre omnibus (10) selon la revendication 1, dans laquelle la découpe en forme de péninsule (S1) est connectée électriquement à une région de la couche conductrice la plus basse (Lu) entre le premier point de contact (P1) et le deuxième point de contact (P2).

6. Barre omnibus (10) selon la revendication 1 ou 5, dans laquelle la découpe en forme de péninsule (S1) s'étend dans la direction longitudinale de la barre omnibus (10).

7. Barre omnibus (10) selon au moins l'une des revendications précédentes, dans laquelle la barre omnibus (10) comprend, au niveau d'au moins l'un des points de contact (P1, P2), une saillie latérale (K) transversalement à la direction longitudinale, moyennant quoi la largeur de la barre omnibus (10) est augmentée localement.

8. Barre omnibus (10) selon au moins l'une des revendications 1 à 3, dans laquelle:
la barre omnibus (10) comprend trois couches conductrices (Lu, Lm, Lo);
la couche conductrice la plus haute (Lo) est connectée électriquement à la couche conductrice centrale (Lm) par des points de soudure au niveau du premier point de contact (P1) et du deuxième point de contact (P2);
la couche conductrice la plus basse (Lu) est connectée électriquement à la couche conductrice centrale (Lm) par des points de soudure au niveau d'un troisième point de contact (P3); et
le troisième point de contact (P3) est disposé centralement entre le premier point de contact (P1) et le deuxième point de contact (P2).

9. Batterie électrique (20) comprenant une pluralité de cellules individuelles (21), dans laquelle:
la batterie (20) comprend au moins une barre omnibus (10) selon au moins l'une des revendications 1 à 8;
la couche conductrice la plus haute (Lo) de la barre omnibus (10) comprend une pluralité de connecteurs de cellule (22) pour connecter électriquement les cellules individuelles (21) à la barre omnibus (10); et
les connecteurs de cellule (22) sont disposés à intervalles égaux le long d'une direction longitudinale de la barre omnibus (10).
